# EUROPEAN PATENT SPECIFICATION

(11) **EP 2 395 218 B1**
(45) Date of publication and mention of the grant of the patent: **26.06.2013**
(21) Application number: 10738378.8
(22) Date of filing: 05.02.2010
(51) Int. Cl.: F02D 21/08, B01D 53/94, F02D 41/38, F02M 25/07, B01D 46/42

(54) **INTERNAL COMBUSTION ENGINE EXHAUST PURIFYING DEVICE AND EXHAUST PURIFYING METHOD**
VORRICHTUNG UND VERFAHREN ZUR ABGASREINIGUNG BEI EINEM VERBRENNUNGSMOTOR
DISPOSITIF DE PURIFICATION D'ÉCHAPPEMENT DE MOTEUR À COMBUSTION INTERNE ET PROCÉDÉ DE PURIFICATION D'ÉCHAPPEMENT

(30) Priority: 06.02.2009 JP 2009026000
(43) Date of publication of application: 14.12.2011
(73) Proprietor: Honda Motor Co., Ltd., Minato-ku Tokyo 107-8556 (JP)
(72) Inventor: WADA, Katsuji, Wako-shi Saitama 351-0193 (JP)
(74) Representative: Feller, Frank
(86) International application number: PCT/JP2010/000703
(87) International publication number: WO 2010/090037

(56) References cited:
- EP-A1- 1 840 348
- WO-A1-2008/050900
- WO-A2-2006/008600
- JP-A- 2002 276 405
- JP-A- 2002 276 405
- JP-A- 2005 307 744
- JP-A- 2006 022 770
- JP-A- 2008 008 205
- JP-A- 2008 106 658
- JP-A- 2008 232 073

## Description

### TECHNICAL FIELD

The present invention relates to an internal combustion engine exhaust purifying device and an exhaust purifying method. In particular, the present invention relates to an exhaust purifying device including an exhaust purification filter that collects particulate matter contained in the exhaust emitted from an internal combustion engine, and an exhaust purifying method.

### BACKGROUND ART

With diesel engines, lean-burn engines, etc., particulate matter with carbon as a main component is discharged due to the air/fuel ratio in the cylinders becoming non-uniform, and combusting in a state in which oxygen is insufficient in locally rich regions. Therefore, technology providing an exhaust purifying filter that collects particulate matter in exhaust gas to the exhaust system has been widely employed in order to reduce the amount of emissions of such particulate matter. Since there is a limit to the amount of particulate matter that can be collected by this exhaust purifying filter, filter regeneration processing to cause the particulate matter collected in the exhaust purifying filter to combust is executed as appropriate.

More specifically, in this filter regeneration processing, post injection is executed to add unburned fuel into the exhaust gas. The oxidation reaction is thereby promoted on an oxidation catalyst supported on the exhaust purifying filter or an oxidation catalyst provided upstream of the exhaust purifying filter, the temperature of exhaust flowing into the exhaust purifying filter is raised up to the combustion temperature of particulate matter, and the deposited particulate matter is combusted.

On the other hand, technology has been known that recirculates a portion of the exhaust gas of the internal combustion engine to the intake air and causes the combustion temperature in the cylinders to decrease by allowing the new air and exhaust gas to mix, whereby the NOx emitted from the internal combustion engine is decreased (hereinafter referred to as EGR technology).

An exhaust purifying device for an internal combustion engine applying the aforementioned such EGR technology in the filter regeneration processing is proposed in Japanese Unexamined Patent Application Publication No. JP 2006-22770 A, for example. With this exhaust purifying device, the recirculation point of the exhaust gas is changed depending on the magnitude of the load on the internal combustion engine, while performing an exhaust purifying filter, which provided in the exhaust system on a downstream side of the turbine of the turbocharger, regeneration processing.

More specifically, while performing the filter regeneration processing, exhaust gas extracted from a downstream side of the exhaust purifying filter is recirculated to an upstream side of the intercooler of the turbocharger in a case of the internal combustion engine being high load, and exhaust gas extracted from a downstream side of the exhaust purifying filter is recirculated to a downstream side of the intercooler in a case of the internal combustion engine being low load. In this way, the combustion temperature is prevented from declining excessively and the combustion becoming unstable, by recirculating to the downstream side of the intercooler so as to bypass the intercooler during low load of the internal combustion engine.

An exhaust purifying device according to the preamble of claim 1 and an exhaust purifying method according to the preamble of claim 4 is known from EP 1 840 348 A1.

### DISCLOSURE OF THE INVENTION

### Problems to be Solved by the Invention

However, with the exhaust purifying device disclosed in JP 2006-22770 A, exhaust gas is always extracted from a downstream side of the exhaust purifying filter while performing the filter regeneration processing. Due to having passed through the turbine and the exhaust gas purifying filter, the exhaust gas on a downstream side of the exhaust purifying filter is cooler than the exhaust gas on an upstream side of the turbine, for example. Therefore, if the exhaust gas on a downstream side of such an exhaust purifying filter is always continuously recirculated while performing the filter regeneration processing, the temperature of the exhaust gas will also decrease due to combustion thereof, and it will take a long time until the temperature of the exhaust gas reaches the combustion temperature of particulate matter. As a result, excessive time will be required in the regeneration of the filter, and the fuel economy may deteriorate in proportion to this excess time.

The present invention has been made taking the aforementioned points into account, and has an object of providing an exhaust purifying device for an internal combustion engine that can regenerate the exhaust purifying filter at high efficiency without deteriorating the fuel economy.

### Means for Solving the Problems

This object is achived by an exhaust purifying device having the features of claim 1 and an exhaust purifying method having the features of claim 4. The invention according to claim 1 provides an exhaust purifying device for an internal combustion engine equipped with a turbocharger (8) that driver a compressor (82) by rotation of a turbine (81) provided in an exhaust system of the internal combustion engine (1), and an exhaust purifying filter (32) that is provided in the exhaust system further downstream than the turbine and collects particulate matter in exhaust. The exhaust purifying device includes: a first EGR path (6) that recirculates a portion of exhaust gas on an upstream side of the turbine into an intake path (2, 3) of the internal combustion engine; a first EGR control means (11, 40, 43) for controlling a flow rate of exhaust gas being recirculated via the first EGR path; a second EGR path (10) that recirculates a portion of exhaust gas downstream of the exhaust purifying filter into the intake path; a second EGR control means (12, 40, 44) for controlling a flow rate of exhaust gas being recirculated via the second EGR path; an exhaust system temperature detection means (22) for detecting a temperature of the exhaust system; a regeneration timing determination means (40) for determining whether it is a timing at which to cause particulate matter collected in the exhaust purifying filter to combust; and an EGR switching means (40, 45) for switching between recirculation control of exhaust gas by way of the first EGR control means and recirculation control of exhaust gas by way of the second EGR control means according to the temperature of the exhaust system detected by the exhaust system temperature detection means, in a case of having determined to be a timing at which to cause the particulate matter to combust.

Further, the exhaust purifying device for an internal combustion engine includes: an oxidation catalyst (31) provided in the exhaust system further upstream than the exhaust purifying filter; and a catalyst activity determination means (40) for determining whether a temperature of the oxidation catalyst has reached an activation temperature thereof, based on the temperature of the exhaust system detected by the exhaust system temperature detection means. According to claim 2, the EGR switching means selects recirculation control of exhaust gas by way of the first EGR control means, in a case of having determined that the temperature of the oxidation catalyst has not reached the activation temperature.

Further, the exhaust purifying device for an internal combustion engine includes: a regeneration execution means (40, 41) for raising a temperature of exhaust gas flowing into the exhaust purifying filter by performing post injection, in a case of having determined to be a timing at which to cause the particulate matter to combust and having determined that the temperature of the oxidation catalyst has reached the activation temperature; and a combustion determination means for determining whether the temperature of exhaust gas flowing into the exhaust purifying filter has reached a combustion temperature of particulate matter, based on the temperature of the exhaust system detected by the exhaust system temperature detection means. The EGR switching means selects recirculation control of exhaust gas by way of the first EGR control means, in a case of having determined that the temperature of exhaust gas has not reached the combustion temperature.

Further, The EGR switching means selects recirculation control of exhaust gas by way of the second EGR control means, in a case of having determined that the temperature of exhaust gas has reached the combustion temperature.

According to claim 3, a post injection amount is reduced more while recirculation control of exhaust gas is performed by way of the second EGR control means, than while recirculation control of exhaust is performed by way of the first EGR control means.

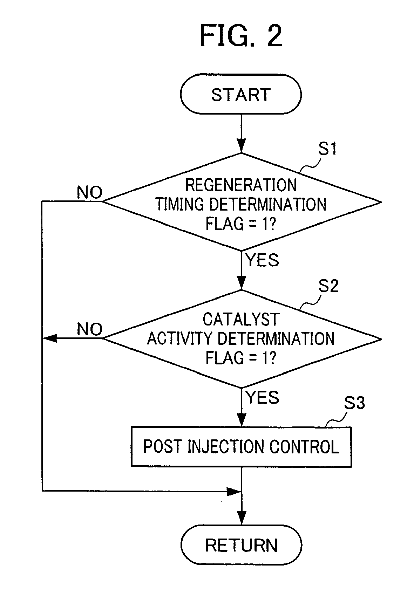

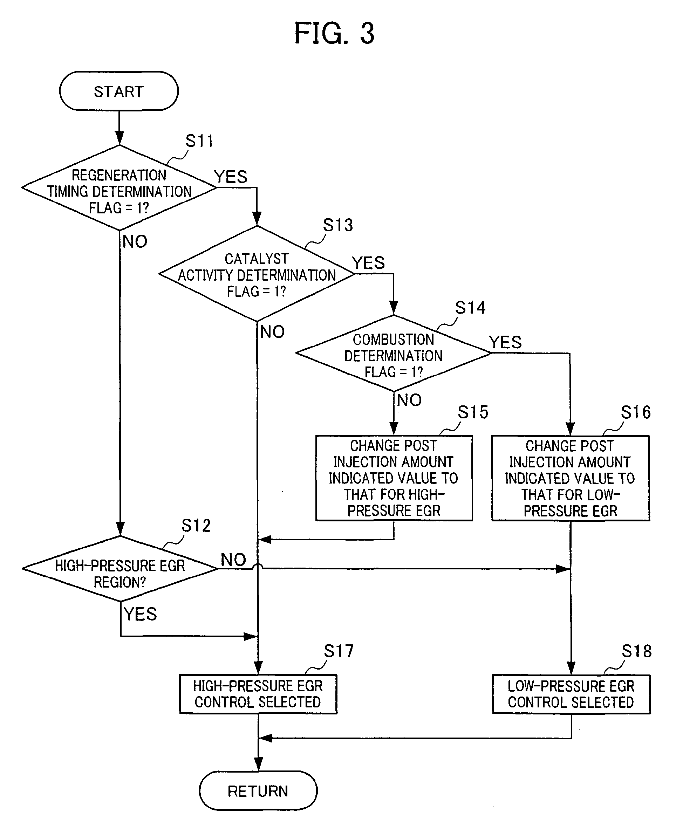

The invention according to claim 4 provides an exhaust purifying method for an internal combustion engine (1) equipped with: a turbocharger (8) that drives a compressor (82) by rotation of a turbine (81) provided in an exhaust system of the internal combustion engine; an exhaust purifying filter (32) that is provided in the exhaust system further downstream than the turbine and collects particulate matter in the exhaust; a first EGR path (6) that recirculates a portion of exhaust gas on an upstream side of the turbine into an intake path (2, 3) of the internal combustion engine; a first EGR control means (11, 40, 43) for controlling a flow rate of exhaust gas being recirculated via the first EGR path; a second EGR path (10) that recirculates a portion of exhaust gas downstream of the exhaust purifying filter into the intake path; a second EGR control means (12, 40, 44) for controlling a flow rate of exhaust gas being recirculated via the second EGR path; and an exhaust system temperature detection means (22) for detecting a temperature of the exhaust system. The exhaust purifying method includes: a regeneration time determination step (processing of Step S1 in FIG. 2 and Step S11 in FIG. 3) of determining whether it is a timing at which to cause particulate matter collected in the exhaust purifying filter to combust; and an EGR switching step (processing of Steps S11 to S18 in FIG. 3) of switching between recirculation control of exhaust gas by way of the first EGR control means and recirculation control of exhaust gas by way of the second EGR control means according to the temperature of the exhaust system detected by the exhaust system temperature detection means, in a case of having determined to be a timing at which to cause the particulate matter to combust.

### Effects of the Invention

According to claim 1, provided are the first EGR path that recirculates a portion of exhaust gas upstream of the turbine into the intake path, the first EGR control means for controlling the flow rate of exhaust gas being recirculated via this first EGR path, the second EGR path that recirculates a portion of the exhaust gas downstream of the exhaust purifying filter into the intake path, and the second EGR control means for controlling the flow rate of exhaust gas being recirculated via this second EGR path.

Herein, a case of performing recirculation control of the exhaust gas by way of the first EGR control means and a case of performing circulation control of the exhaust gas by way of the second EGR control means will be compared.

In the case of performing recirculation control of exhaust gas by way of the first EGR control means, the exhaust gas is extracted from upstream of the turbine; therefore, the temperature of the exhaust gas can be quickly raised compared to the case of performing recirculation control of the exhaust gas by way of the second EGR control means.

In contrast, in the case of performing recirculation control of the exhaust gas by way of the first EGR control means while performing post injection in order to combust the particulate matter collected in the exhaust purifying filter, most of the fuel supplied by post injection is recirculated without reaching the oxidation catalyst; therefore, excessive fuel is required compared to the case of performing recirculation control of the exhaust gas by way of the second EGR control means.

Further in a case of particulate matter depositing in the exhaust purifying filter, and having determined to be time at which to cause this particulate matter to combust, selection between recirculation control of the exhaust gas by way of the aforementioned first EGR control means and recirculation control of the exhaust gas by way of the second EGR control means is performed according to the exhaust system temperature.

It is thereby possible to quickly raise the temperature of the exhaust gas by performing recirculation control of the exhaust gas by way of the first EGR control means in a case of the exhaust system temperature being low, and to combust particulate matter without consuming excessive fuel by performing recirculation control of the exhaust gas by way of the second EGR control means in a case of the exhaust system temperature being high. As a result, it is possible to regenerate the exhaust purifying filter at high efficiency without deteriorating the fuel economy. In addition, by configuring in this way, NOx emissions can also be decreased by continuously performing recirculation control of the exhaust gas by either of the first EGR control means and second EGR control means.

According to claim 2, in a case of having determined that the oxidation catalyst has not reached the activation temperature, recirculation control of the exhaust gas by way of the first EGR control means is selected. Since the oxidation catalyst can be quickly activated thereby, it is possible to suppress the consumption of excess fuel.

Further, in a case of having determined to be a time at which to cause particulate matter to combust and having determined that the temperature of the oxidation catalyst has reached the activation temperature, post injection is performed and the temperature of the exhaust gas rises. Subsequently, in a case of having determined that the temperature of the exhaust gas has not reached the combustion temperature of particulate matter in the course of the temperature of the exhaust gas rising, recirculation control of the exhaust gas by way of the first EGR control means is selected. Since the temperature of the exhaust gas can thereby be made to quickly reach the combustion temperature of particulate matter, the fuel consumption for regeneration of the exhaust purifying filter can be curbed.

Further, in a case of having determined that the temperature of the exhaust gas has reached the combustion temperature of particulate matter, recirculation control of the exhaust gas by way of the second EGR control means is selected. The unburned fuel supplied to the exhaust path by executing post injection is thereby made to effectively reach the oxidation catalyst and can serve in the combustion of particulate matter collected in the exhaust purifying filter. Therefore, the fuel consumption for the regeneration of the exhaust purifying filter can be curbed. In addition, since the unburned fuel can be made to combust in the oxidation catalyst by selecting recirculation control of the exhaust gas by way of the second EGR control means, unburned fuel can be suppressed from adhering to the second EGR path while recirculating exhaust gas.

According to claim 3, the post injection amount is reduced more while recirculation control of the exhaust gas is being performed by way of the second EGR control means than while recirculated control of the exhaust gas is being performed by way of the first EGR control means.

As stated above, in a case of performing recirculation control of the exhaust gas by way of the second EGR control means, most of the fuel supplied in post injection can be made to reach the oxidation catalyst, when compared to a case of performing recirculation control of the exhaust gas by way of the first EGR control means. Therefore, it is possible to realize the oxidation reaction in the oxidation catalyst at equivalent efficiency with less fuel than a case of performing recirculation control of the exhaust gas by way of the first EGR control means. As a result, the consumption of excess fuel can be suppressed.

Similar effects to the aspect of the invention according to claim 1 are exerted by the aspect of the invention according to claim 4.

### BRIEF DESCRIPTION OF THE DRAWINGS

FIG. 1 is a view showing configurations of an internal combustion engine and an exhaust purifying device thereof according to an embodiment of the present invention;
FIG. 2 is a flowchart showing a sequence of DPF regeneration processing by an ECU according to the embodiment;
FIG. 3 is a flowchart showing a sequence of EGR switch processing by the ECU according to the embodiment; and
FIG. 4 is a graph showing an EGR region determination map.

### EXPLANATION OF REFERENCE NUMERALS

1 Engine (internal combustion engine)
2 Intake plumbing (intake path)
3 Intake manifold (intake path)
4 Exhaust plumbing
5 Exhaust manifold
6 High-pressure EGR path (first EGR path)
11 High-pressure EGR valve (first EGR control means)
10 Low-pressure EGR path (second EGR path)
12 Low-pressure EGR valve (second EGR control means)
8 Turbocharger
22 Exhaust gas temperature sensor (exhaust system temperature detection means)
31 Oxidation catalyst
32 DPF (exhaust purifying filter)
40 ECU (first EGR control means, second EGR control means, regeneration timing determination means, EGR switching means, catalyst activity determination means, regeneration execution means, combustion determination means)

### PREFERRED MODE FOR CARRYING OUT THE INVENTION

An embodiment of the present invention will be explained in detail hereinafter while referring to the drawings.

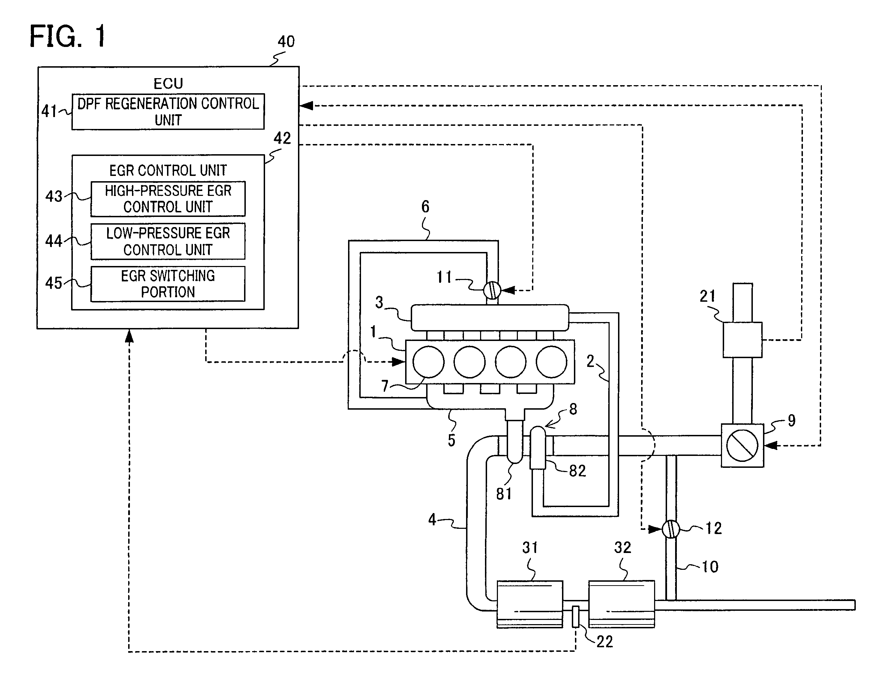

FIG. 1 is a view showing configurations of an internal combustion engine and an emission control device thereof according to an embodiment of the present invention. An internal combustion engine (hereinafter referred to as "engine") 1 is a diesel engine that directly injects fuel into the combustion chamber of each cylinder 7, and a fuel injector, which is not illustrated, is provided to each of the cylinders 7. These fuel injectors are electrically connected by an electronic control unit (hereinafter referred to as "ECU") 40, and the valve-open duration and the valve-close duration of the fuel injectors are controlled by the ECU 40.

The engine 1 is provided with intake plumbing 2 through which intake air flows, exhaust plumbing 4 through which exhaust gas flows, a high-pressure EGR path 6 and a low-pressure EGR path 10 that recirculate a portion of the exhaust gas into the intake air, and a turbocharger 8 that pressure feeds intake air in the intake plumbing 2.

The intake plumbing 2 is connected to the intake port of each cylinder 7 of the engine 1 via a plurality of branches of an intake manifold 3. The exhaust plumbing 4 is connected to the exhaust port of each cylinder 7 of the engine 1 via a plurality of branches of an exhaust manifold 5.

The turbocharger 8 includes a turbine 81 provided to the exhaust plumbing 4 and a compressor 82 provided to the intake plumbing 2. The turbine 81 is driven by the kinetic energy of exhaust gas flowing in the exhaust plumbing 4. The compressor 82 is driven by the rotation of the turbine 81, and compresses and feeds intake air into the intake plumbing 2. In addition, the turbine 81 is provided with a plurality of variable vanes, which are not illustrated, and is configured so that the turbine revolution speed can vary by way of causing the aperture of the variable vanes to change. The vane aperture is electromagnetically controlled by the ECU 40.

A throttle valve 9 that controls the intake air amount of the engine 1 is provided inside the intake plumbing 2 at an upstream side of the turbocharger 8. This throttle valve 9 is connected to the ECU 40 via an actuator, and the aperture thereof is electromagnetically controlled by the ECU 40. The intake air amount controlled by the throttle valve 9 is detected by an air flow meter 21.

The high-pressure EGR path 6 connects the exhaust manifold 5 and the intake manifold 3, and recirculates a portion of the exhaust gas upstream of the turbine 81 into the intake plumbing 2 downstream of the compressor 82. A high-pressure EGR valve 11 that controls the flow rate of exhaust gas being recirculated is provided in the high-pressure EGR path 6. The high-pressure EGR valve 11 is connected to the ECU 40 via an actuator that is not illustrated, and the valve aperture thereof is electromagnetically controlled by the ECU 40.

The low-pressure EGR path 10 connects a downstream side of a DPF 32 described later in the exhaust plumbing 4 and an upstream side of the compressor 82 in the intake plumbing 2, and recirculates a portion of the exhaust gas downstream of the DPF 32 into the intake plumbing 2 upstream of the compressor 82. A low-pressure EGR valve 12 that controls the flow rate of exhaust gas being recirculated is provided in the low-pressure EGR path 10. The low-pressure EGR valve 12 is connected to the ECU 40 via an actuator that is not illustrated, and the valve aperture thereof is electromagnetically controlled by the ECU 40.

Furthermore, an oxidation catalyst 31 and the DPF (Diesel Particulate Filter) 32 are provided in order from an upstream side in the exhaust plumbing 4 downstream of the turbine 81.

The oxidation catalyst 31 raises the temperature of the exhaust gas with the heat generated by reaction with exhaust gas. A catalyst, configured by adding a zeolite that excels in HC adsorption and rhodium (Rh) that excels in HC steam reforming action to a support on which platinum (Pt) acting as the catalyst is supported on an alumina (Al₂O₃) carrier, is used in this oxidation catalyst 31.

The DPF 32 collects particulate matter having carbon as a main component in the exhaust gas by causing to deposit on the surface of the filter walls and holes in the filter walls when exhaust gas passes through the fine holes of the filter walls. For example, a porous medium of ceramic such as silicon carbide (SiC) is used as the construction material of the filter walls. When PM is collected until the limit of the collection capacity of the DPF 32, i.e. the deposition limit, since the pressure drop in the exhaust plumbing 4 increases, the DPF regeneration processing described later is performed to combust the collected PM.

A crank angle position sensor (not illustrated) that detects the rotational angle of the crankshaft of the engine 1, an accelerator sensor (not illustrated) that detects a depression amount of the accelerator pedal of a vehicle being driven by the engine 1, a coolant temperature sensor (not illustrated) that detects the coolant temperature of the engine 1, a cylinder pressure sensor (not illustrated) that detects the pressure inside the combustion chamber of each cylinder 7 of the engine 1, the air-flow meter 21 that detects an intake air amount (air amount newly aspirated into the engine 1 per unit time) of the engine 1, and an exhaust gas temperature sensor 22 that detects the temperature of the exhaust gas flowing in the exhaust plumbing 4 between the oxidation catalyst 31 and the DPF 32, and the detection signals of these sensors are supplied to the ECU 40.

Herein, the revolution speed of the engine 1 is calculated by the ECU 40 based on the output of the crank angle position sensor. A generated torque of the engine 1, i.e. load of the engine 1, is calculated by the ECU 40 based on the fuel injection amount of the engine 1. In addition, this fuel injection amount is calculated by the ECU 40 based on the output of the accelerator sensor.

The ECU 40 includes an input circuit that has functions such as of shaping input signal wave forms from every kind of sensor, correcting the voltage levels to predetermined levels, and converting analog signal values to digital signal values, and a central processing unit (hereinafter referred to as "CPU"). In addition to this, the ECU 40 includes a storage circuit that stores every kind of calculation program executed by the CPU and calculation results, and an output circuit that outputs control signals to the throttle valve 9, high-pressure EGR valve 11, low-pressure EGR valve 12, turbocharger 8, fuel injectors of the engine 1, and the like.

The modules of the DPF regeneration control unit 41 and the EGR control unit 42 are configured in the ECU 40 according to the above such hardware configuration. The functions of each module will be explained hereinafter.

By executing DPF regeneration processing, which is explained while referred to FIG. 2 later, the DPF regeneration control unit 41 combusts the PM deposited in the DPF 32 to regenerate this DPF 32.

The EGR control unit 42 is configured to include a high-pressure EGR control portion 43 that controls the flow rate of exhaust gas being recirculated via the high-pressure EGR path 6, and a low-pressure EGR control portion 44 that controls the flow rate of exhaust gas being recirculated via the low-pressure EGR path 10.

The high-pressure EGR control portion 43 controls the aperture of the high-pressure EGR valve 11 to control the flow rate of the exhaust gas being recirculated via the high-pressure EGR path 6. In addition, while recirculation control of the exhaust gas is being performed by this high-pressure EGR control portion 43, the low-pressure EGR valve 12 is basically closed.

The low-pressure EGR control portion 44 controls the aperture of the low-pressure EGR valve 12 to control the flow rate of the exhaust gas being recirculated via the low-pressure EGR path 10. In addition, while recirculation control of the exhaust gas is being performed by this low-pressure EGR control portion 44, the high-pressure EGR valve 11 is basically closed.

In addition to this, the EGR control unit 42 includes an EGR switching portion 45 that executes EGR switch processing to selectively switch between recirculation control of the exhaust gas by the high-pressure EGR control portion 43 and the recirculation control of the exhaust gas by the low-pressure EGR control portion 44. The detailed sequence of this EGR switch processing will be explained later while referring to FIG. 3.

FIG. 2 is a flowchart showing the sequence of DPF regeneration processing. This DPF regeneration processing is repeatedly executed at a predetermined period by the aforementioned DPF regeneration control unit of the ECU.

In Step S1, it is determined whether a regeneration timing determination flag is "1". In a case of this determination being YES, Step S2 is advanced to, and in a case of being NO, the DPF regeneration processing is ended.

This regeneration timing determination flag is a flag indicating it being a timing at which to cause the PM collected in the DPF to combust, i.e. timing at which to cause the DPF to regenerate, and in a case of the deposited amount of PM collected in the DPF exceeding a predetermined value, is set from "0" to "1". This PM deposited amount is estimated based on the history of the engine revolution speed and fuel injection amount, the travelled distance, and the like. Furthermore, the PM deposited amount can be estimated from the pressure differential between the upstream side and downstream side of the DPF. In addition, this regeneration timing determination flag is returned from "1" to "0" in a case of combustion of the PM collected in the DPF completing, by executing post injection control described later (refer to Step S3).

In Step S2, it is determined whether a catalyst activity determination flag is "1". In a case of this determination being YES, Step S3 is advanced to, and in a case of being NO, the DPF regeneration processing is ended.

This catalyst activity determination flag is a flag indicating that the oxidation catalyst is in an activated state, i.e. the temperature of the oxidation catalyst is a state higher than the activation temperature thereof. This catalyst activity determination flag is set from "0" to "1" in a case of a detected value of the exhaust gas temperature sensor exceeding the activation temperature of the oxidation catalyst, and is returned from "1" to "0" in a case of the detected value of the exhaust gas temperature sensor falling below the activation temperature.

In Step S3, post injection control is executed, and the DPF regeneration processing is ended. More specifically, in Step S3, fuel injection not contributing to torque, i.e. post injection, is performed and the unburned fuel is made to combust at the oxidation catalyst. The temperature of the exhaust gas flowing into the DPF is thereby raised, and the PM collected in the DPF is made to combust. Herein, a predetermined indicated value set in advance is used as the post injection amount. It should be noted that this indicated value of the post injection amount is changed as appropriate in Steps S15 and S16 of FIG. 3 described later.

FIG. 3 is a flowchart showing the sequence of EGR switch processing. This EGR switch processing is repeatedly executed at a predetermined period by the EGR switching portion of the aforementioned ECU.

In Step S11, it is determined whether the regeneration timing determination flag is "1". In a case of this determination being YES, Step S13 is advanced to. In a case of this determination being NO, Step S12 is advanced to.

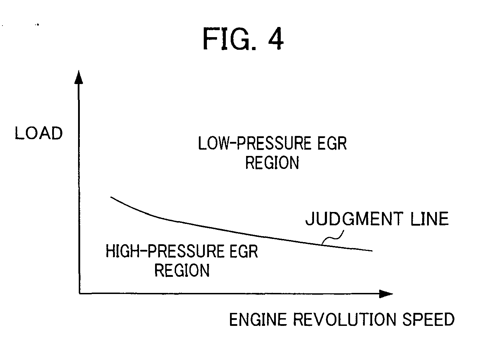

In Step S12, it is determined whether the current operating state is in the high-pressure EGR region. More specifically, it is determined whether this operating state is in the high-pressure EGR region based on a control map such as that shown in FIG. 4. In a case of this determination being YES, Step S17 is advanced to, and high-pressure EGR control, i.e. recirculation control of the exhaust gas via the high-pressure EGR path, is selected. Furthermore, in a case of this determination being NO, Step S18 is advanced to, and low-pressure EGR control, i.e. recirculation control of the exhaust gas via the low-pressure EGR path, is selected.

FIG. 4 is a graph showing an EGR region determination map, and is a graph showing an example of the control map that is referred to in the aforementioned Step S12. This EGR region determination map is set based on a predetermined experiment and is stored in the ECU.

As shown in FIG. 4, with the engine revolution speed and load set as parameters expressing the operating state, the operating state is divided into a low-pressure EGR region in which low-pressure EGR control is suited and a high-pressure EGR region in which high-pressure EGR control is suited. According to this control map, basically, high-pressure EGR control is selected in a case of the load being low, and low-pressure EGR control is selected in a case of the load being high. In addition, the judgment line dividing the high-pressure EGR region and the low-pressure EGR region becomes lower as the engine revolution speed increases. In other words, when the engine revolution speed increases, low-pressure EGR control is selected even at low load.

Referring back to FIG. 3, in Step S13, it is determined whether the catalyst activity determination flag is "1". In a case of this determination being YES, i.e. in a case of the oxidation catalyst being in an activated state, Step S14 is advanced to. In addition, in a case of this determination being NO, i.e. in a case of the temperature of the oxidation catalyst not reaching the activation temperature, Step S17 is advanced to and high-pressure EGR control is selected.

In Step S14, it is determined whether a combustion determination flag is "1". In a case of this determination being YES, Step S16 is advanced to, and in a case of being NO, Step S15 is advanced to.

The combustion determination flag is a flag indicating that the temperature of the exhaust flowing into the DPF is higher than the combustion temperature of PM. This combustion determination flag is set from "0" to "1" in a case of the detected value of the exhaust gas temperature sensor exceeding the combustion temperature of PM, and is returned from "1" to "0" in a case of the detected value of the exhaust gas temperature sensor falling below the combustion temperature of PM. It should be noted that the combustion temperature of PM is generally higher than the activation temperature of an oxidation catalyst.

Therefore, a case of the catalyst activity determination flag being "1" and the combustion determination flag being "0" is considered to be a state in which the oxidation catalyst is in the activated state and the temperature of the exhaust gas flowing into the DPF is no higher than the combustion temperature of PM, i.e. a state in which the temperature of the exhaust gas has not reached the activation temperature of PM and the PM collected in the DPF is not yet being combusted.

In addition, a case of the catalyst activity determination flag being "1" and the combustion determination flag being "1" is considered to be a state in which the oxidation catalyst is in the activated state and the temperature of the exhaust gas flowing into the DPF is higher than the combustion temperature of PM, i.e. a state in which the temperature of the exhaust gas reaches the combustion temperature of PM and the PM collected in the PM is being combusted.

In Step S15, after the indicated value of the post injection amount has changed to the indicated value for high-pressure EGR, high-pressure EGR control is selected (Step S17).

In Step S16, after the indicated value of the post injection amount is changed to the indicated value for low-pressure EGR, which is smaller than the aforementioned high-pressure EGR indicated value, low-pressure EGR control is selected (Step S18). The post injection amount is thereby reduced more while low-pressure EGR control is being executed than while high-pressure EGR control is being executed.

As explained in detail in the foregoing, according to the present embodiment, in a case of it being determined that PM is deposited in the DPF 32 and it is at timing at which to cause this PM to combust, switching between high-pressure EGR control and low-pressure EGR control is performed according to the temperature of the exhaust gas detected by the exhaust gas temperature sensor.

It is thereby possible to make the temperature of the exhaust gas quickly rise by performing high-pressure EGR control in a case of the temperature of the exhaust gas being low, and to make the PM combust without consuming excessive fuel by performing low-pressure EGR control in a case of the temperature of the exhaust gas being high. As a result, the DPF 32 can be regenerated at high efficiency without deteriorating the fuel economy. In addition, by configuring in this way, NOx emissions can also be reduced by continuously performing recirculation control of the exhaust gas by either of high-pressure EGR control and low-pressure EGR control.

Furthermore, according to the present embodiment, in a case of having determined that the oxidation catalyst 31 has not reached the activation temperature, high-pressure EGR control is selected. Since the oxidation catalyst 31 can be quickly activated thereby, it is possible to suppress excessive consumption of fuel.

Moreover, according to the present embodiment, in a case of having determined to be a timing at which to cause PM to combust and having determined that the temperature of the oxidation catalyst 31 has reached the activation temperature, post injection is performed and the temperature of the exhaust gas rises. Subsequently, in a case of having determined that the temperature of the exhaust gas has not reached the combustion temperature of PM in the course of the temperature of the exhaust gas rising, high-pressure EGR control is selected. Since the temperature of the exhaust gas can thereby be made to quickly reach the combustion temperature of PM, the fuel consumption for regeneration of the DPF 32 can be curbed.

Furthermore, according to the present embodiment, in a case of having determined that the temperature of the exhaust gas has reached the combustion temperature of PM, low-pressure EGR control is selected. The unburned fuel supplied to the exhaust plumbing 4 by executing post injection is thereby made to effectively reach the oxidation catalyst 31 and can serve in the combustion of PM collected in the DPF 32. Therefore, the fuel consumption for the regeneration of the DPF 32 can be curbed. In addition, since the unburned fuel can be made to combust in the oxidation catalyst 31 by selecting recirculation control of the exhaust gas by way of low-pressure EGR control, unburned fuel can be suppressed from adhering to the low-pressure EGR path 10 while recirculating exhaust gas.

Moreover, according to the present embodiment, the post injection amount is reduced more while low-pressure EGR control is being executed than while high-pressure EGR control is being executed.

As stated above, in a case of performing low-pressure EGR control, most of the fuel supplied in post injection can be made to reach the oxidation catalyst 31, when compared to a case of performing high-pressure EGR control. Therefore, according to the present embodiment, it is possible to realize the oxidation reaction in the oxidation catalyst 31 at equivalent efficiency with less fuel than a case of performing high-pressure EGR control. As a result, the excessive consumption of fuel can be curbed.

In the present embodiment, the ECU 40 configures a portion of the first EGR control means, a portion of the second EGR control means, the regeneration timing determination means, the EGR switching means, the catalyst activity determination means, the regeneration execution means, and the combustion determination means. More specifically, the high-pressure EGR control portion 43 of the ECU 40 and the high-pressure EGR valve 11 correspond to the first EGR control means, the low-pressure EGR control portion 44 of the ECU 40 and the low-pressure EGR valve 12 correspond to the second EGR control means, the EGR switching portion 45 of the ECU 40 corresponds to the EGR switching means, and the DPF regeneration control unit 41 of the ECU 40 corresponds to the regeneration execution means. In addition, the means relating to the execution of Step S1 in FIG. 2 and Step S11 in FIG. 3 correspond to the regeneration time determination means, the means relating to the execution of Step S2 in FIG. 2 and Step S13 in FIG. 3 correspond to the catalyst activity determination means, and the means relating to the execution of Step S14 in FIG. 3 corresponds to the combustion determination means.

It should be noted that the present invention is not to be limited to the above-mentioned embodiment, and modifications, improvements and the like within the scope of the claims are included in the present invention.

In the above-mentioned embodiment, although the exhaust gas temperature sensor 22 that detects the temperature of the exhaust gas between the oxidation catalyst 31 and the DPF 32 is used as the exhaust system temperature detection means for detecting the temperature of the exhaust system of the engine 1, it is not limited thereto. The temperature of the exhaust system in the present invention is not only the temperature of the exhaust gas between the oxidation catalyst and the DPF, but also includes the temperature of the oxidation catalyst or DPF itself. Therefore, a means for directly detecting the temperature of the oxidation catalyst or DPF may be used as the exhaust system temperature detection means.

In addition, in the above-mentioned embodiment, although the oxidation catalyst 31 and DPF 32 are provided separately, it is not limited thereto. For example, a configuration in which the oxidation catalyst is supported on the filter walls of the DPF may be used.

## Claims

1. An exhaust purifying device for an internal combustion engine (1) equipped with a turbocharger (8) that drives a compressor (82) by rotation of a turbine (81) provided in an exhaust system of the internal combustion engine (1), and
an exhaust purifying filter (32) that is provided in the exhaust system further downstream than the turbine (81) and collects particulate matter in the exhaust, the device comprising:
a first EGR path (6) that recirculates a portion of exhaust gas on an upstream side of the turbine (81) into an intake path (2, 3) of the internal combustion engine (1);
a first EGR control means (11, 40, 43) for controlling a flow rate of exhaust gas being recirculated via the first EGR path (6);
a second EGR path (10) that recirculates a portion of exhaust gas downstream of the exhaust purifying filter (32) into the intake path (2, 3);
a second EGR control means (12, 40, 44) for controlling a flow rate of exhaust gas being recirculated via the second EGR path (10);
an exhaust system temperature detection means (22) for detecting a temperature of the exhaust system;
a regeneration timing determination means (40) for determining whether it is a timing at which to cause particulate matter collected in the exhaust purifying filter (32) to combust; and
an oxidation catalyst (31) provided in the exhaust system further upstream than the exhaust purifying filter (32); and
a catalyst activity determination means (40) for determining whether a temperature of the oxidation catalyst (31) has reached an activation temperature thereof, based on the temperature of the exhaust system detected by the exhaust system temperature detection means (22); and
an EGR switching means (40, 45) for switching between recirculation control of exhaust gas by way of the first EGR control means (11, 40, 43) and recirculation control of exhaust gas by way of the second EGR control means (12, 40, 44) according to the temperature of the exhaust system detected by the exhaust system temperature detection means (22), in a case of having determined to be a timing at which to cause the particulate matter to combust;
**characterized in that**
the device further comprises
a regeneration execution means (40, 41) for raising a temperature of exhaust gas flowing into the exhaust purifying filter (32) by performing post injection, in a case of having determined to be a timing at which to cause the particulate matter to combust and having determined that the temperature of the oxidation catalyst (31) has reached the activation temperature; and
a combustion determination means for determining whether the temperature of exhaust gas flowing into the exhaust purifying filter (32) has reached a combustion temperature of particulate matter, based on the temperature of the exhaust system detected by the exhaust system temperature detection means (22),
wherein the EGR switching means (40, 45) selects recirculation control of exhaust gas by way of the first EGR control means (11, 40, 43) in a case of having determined that the temperature of exhaust gas has not reached the combustion temperature; and
wherein the EGR switching means (40, 45) selects recirculation control of exhaust gas by way of the second EGR control means (12, 40, 44), in a case of having determined that the temperature of exhaust gas has reached the combustion temperature.

2. An exhaust purifying device for an internal combustion engine (1) according to claim 1, wherein the EGR switching means (40, 45) selects recirculation control of exhaust gas by way of the first EGR control means (11, 40, 43), in a case of having determined that the temperature of the oxidation catalyst (31) has not reached the activation temperature;

3. An exhaust purifying device for an internal combustion engine (1) according to claim 1 or 2, wherein a post injection amount is reduced more while recirculation control of exhaust gas is performed by way of the second EGR control means (12, 40, 44), than while recirculation control of exhaust is performed by way of the first EGR control means (11, 40, 43).

4. An exhaust purifying method for an internal combustion engine (1) including:
a turbocharger (8) that drives a compressor (82) by rotation of a turbine (81) provided in an exhaust system of the internal combustion engine (1);
an exhaust purifying filter (32) that is provided in the exhaust system further downstream than the turbine (81) and collects particulate matter in the exhaust;
a first EGR path (6) that recirculates a portion of exhaust gas on an upstream side of the turbine (81) into an intake path (2, 3) of the internal combustion engine (1);
a first EGR control means (11, 40, 43) for controlling a flow rate of exhaust gas being recirculated via the first EGR path (6);
a second EGR path (10) that recirculates a portion of exhaust gas downstream of the exhaust purifying filter(32) into the intake path (2, 3);
a second EGR control means (12, 40, 44) for controlling a flow rate of exhaust gas being recirculated via the second EGR path (10);
an exhaust system temperature detection means (22) for detecting a temperature of the exhaust system;
an oxidation catalyst (31) provided in the exhaust system further upstream than the exhaust purifying filter (32); and
an catalyst activity determination means (40) for determining whether a temperature of the oxidation catalyst (31) has reached an activation temperature thereof, based on the temperature of the exhaust system detected by the exhaust system temperature detection means (22),
the method comprising:
a regeneration time determination step of determining whether it is a timing at which to cause particulate matter collected in the exhaust purifying filter (32) to combust; and
an EGR switching step of switching between recirculation control of exhaust gas by way of the first EGR control means (11, 40, 43) and recirculation control of exhaust gas by way of the second EGR control means (12, 40, 44) according to the temperature of the exhaust system detected by the exhaust system temperature detection means (22), in a case of having determined to be a timing at which to cause the particulate matter to combust,
**characterized in that**
the method further comprises
a regeneration execution step for raising a temperature of exhaust gas flowing into the exhaust purifying filter (32) by performing post injection, in a case of having determined to be a timing at which to cause the particulate matter to combust and having determined that the temperature of the oxidation catalyst (31) has reached the activation temperature; and
a combustion determination step for determining whether the temperature of exhaust gas flowing into the exhaust purifying filter (32) has reached a combustion temperature of particulate matter, based on the temperature of the exhaust system detected by the exhaust system temperature detection means (22),
wherein the EGR switching step selects recirculation control of exhaust gas by way of the first EGR control means (11, 40, 43) in a case of having determined that the temperature of exhaust gas has not reached the combustion temperature; and
wherein the EGR switching step selects recirculation control of exhaust gas by way of the second EGR control means (12, 40, 44), in a case of having determined that the temperature of exhaust gas has reached the combustion temperature.

## Patentansprüche

1. Abgasreinigungsvorrichtung für einen Verbrennungsmotor (1), welcher mit einem Turbolader (8) ausgestattet ist, welcher einen Kompressor (82) durch Drehung einer Turbine (81) antreibt, welche in einem Abgassystem des Verbrennungsmotors (1) vorgesehen ist, und
einem Abgasreinigungsfilter (32), welcher in dem Abgassystem weiter stromabwärts als die Turbine (81) vorgesehen ist und Feinstaub in dem Abgas sammelt, wobei die Vorrichtung umfasst:
einen ersten AGR-Pfad (6), welcher einen Teil des Abgases an einer stromaufwärtigen Seite der Turbine (81) in einen Ansaugpfad (2, 3) des Verbrennungsmotors (1) zurückführt;
ein erstes AGR-Steuerungs-/Regelungsmittel (11, 40, 43) zum Steuern/Regeln einer Strömungsrate eines Abgases, welches über den ersten AGR-Pfad (6) zurückgeführt wird;
einen zweiten AGR-Pfad (10), welcher einen Teil des Abgases stromabwärts des Abgasreinigungsfilters (32) in den Ansaugpfad (2, 3) zurückführt;
ein zweites AGR-Steuerungs-/Regelungsmittel (12, 40, 44) zum Steuern/Regeln einer Strömungsrate eines Abgases, welches über den zweiten AGR-Pfad (10) zurückgeführt wird;
ein Abgassystemtemperaturerfassungsmittel (22) zum Erfassen einer Temperatur des Abgassystems;
ein Regenerationszeitpunktbestimmungsmittel (40) zum Bestimmen, ob ein Zeitpunkt vorliegt, zu welchem veranlasst wird, in dem Abgasreinigungsfilter (32) gesammelten Feinstaub zu verbrennen; und
ein Oxidationskatalysator (31), welcher weiter stromaufwärts in dem Abgassystem als der Abgasreinigungsfilter (32) vorgesehen ist; und
ein Katalysatoraktivitätsbestimmungsmittel (40), zum Bestimmen, ob eine Temperatur des Oxidationskatalysators (31) eine Aktivierungstemperatur davon erreicht hat, auf Basis der von dem Abgassystemtemperaturerfassungsmittel (22) erfassten Temperatur des Abgassystems; und
ein AGR-Schaltmittel (40, 45) zum Schalten zwischen einer Regelung/Steuerung der Zurückführung des Abgases mittels des ersten AGR-Steuerungs-/Regelungsmittels (11, 40, 43) und einer Regelung/Steuerung der Zurückführung des Abgases mittels des zweiten AGR-Steuerungs-/Regelungsmittels (12, 40, 44) gemäß der von dem Abgassystemtemperaturerfassungsmittel (22) erfassten Temperatur des Abgassystems, in einem Fall, in welchem das Vorliegen eines Zeitpunkts bestimmt worden ist, zu welchem veranlasst wird, den Feinstaub zu verbrennen;
**dadurch gekennzeichnet,**
**dass** die Vorrichtung ferner umfasst:
ein Regenerationsausführungsmittel (40, 41) zum Erhöhen einer Temperatur des Abgases, welches in den Abgasreinigungsfilter (32) fließt, durch Ausführen einer Nacheinspritzung, in einem Fall, in welchem das Vorliegen eines Zeitpunkts bestimmt worden ist, zu welchem veranlasst wird, den Feinstaub zu verbrennen und in welchem bestimmt worden ist, dass die Temperatur des Oxidationskatalysators (31) die Aktivierungstemperatur erreicht hat; und
einen Verbrennungsbestimmungsmittel zum Bestimmen, ob die Temperatur des Abgases, welches in den Abgasreinigungsfilter (32) fließt, eine Verbrennungstemperatur von Feinstaub erreicht hat, auf Basis der von dem Abgassystemtemperaturerfassungsmittel (22) erfassten Temperatur des Abgassystems,
wobei das AGR-Schaltmittel (40, 45) Regelung/Steuerung der Zurückführung des Abgases mittels des ersten AGR-Steuerungs-/Regelungsmittels (11, 40, 43) auswählt, in einem Fall, in dem bestimmt worden ist, dass die Temperatur des Abgases die Verbrennungstemperatur nicht erreicht hat; und
wobei das AGR-Schaltmittel (40, 45) Regelung/Steuerung der Zurückführung des Abgases mittels des zweiten AGR-Steuerungs-/Regelungsmittels (12, 40, 44) auswählt, in einem Fall, in dem bestimmt worden ist, dass die Temperatur des Abgases die Verbrennungstemperatur erreicht hat.

2. Abgasreinigungsvorrichtung für einen Verbrennungsmotor (1) nach Anspruch 1, wobei das AGR-Schaltmittel (40, 45) Regelung/Steuerung der Zurückführung des Abgases mittels des ersten AGR-Steuerungs-/Regelungsmittels (11, 40, 43) auswählt, in einem Fall, in dem bestimmt worden ist, dass die Temperatur des Oxidationskatalysators (31) die Aktivierungstemperatur nicht erreicht hat.

3. Abgasreinigungsvorrichtung für einen Verbrennungsmotor (1) nach Anspruch 1 oder 2, wobei eine Nacheinspritzmenge stärker reduziert ist, während Regelung/Steuerung der Zurückführung des Abgases mittels des zweiten AGR-Steuerungs-/Regelungsmittels (12, 40, 44) ausgeführt wird, als während Regelung/Steuerung der Zurückführung des Abgases mittels des ersten AGR-Steuerungs-/Regelungsmittels (11, 40, 43) ausgeführt wird.

4. Abgasreinigungsverfahren für für einen Verbrennungsmotor (1) umfassend:
einen Turbolader (8), welcher einen Kompressor (82) durch Drehung einer Turbine (81) antreibt, welche in einem Abgassystem des Verbrennungsmotors (1) vorgesehen ist;
einen Abgasreinigungsfilter (32), welcher in dem Abgassystem weiter stromabwärts als die Turbine (81) vorgesehen ist und Feinstaub in dem Abgas sammelt;
einen ersten AGR-Pfad (6), welcher einen Teil des Abgases an einer stromaufwärtigen Seite der Turbine (81) in einen Ansaugpfad (2, 3) des Verbrennungsmotors (1) zurückführt;
ein erstes AGR-Steuerungs-/Regelungsmittel (11, 40, 43) zum Steuern/Regeln einer Strömungsrate eines Abgases, welches über den ersten AGR-Pfad (6) zurückgeführt wird;
einen zweiten AGR-Pfad (10), welcher einen Teil des Abgases stromabwärts des Abgasreinigungsfilters (32) in den Ansaugpfad (2, 3) zurückführt;
ein zweites AGR-Steuerungs-/Regelungsmittel (12, 40, 44) zum Steuern/Regeln einer Strömungsrate eines Abgases, welches über den zweiten AGR-Pfad (10) zurückgeführt wird;
ein Abgassystemtemperaturerfassungsmittel (22) zum Erfassen einer Temperatur des Abgassystems;
ein Oxidationskatalysator (31), welcher weiter stromaufwärts in dem Abgassystem als der Abgasreinigungsfilter (32) vorgesehen ist; und
ein Katalysatoraktivitätsbestimmungsmittel (40), zum Bestimmen, ob eine Temperatur des Oxidationskatalysators (31) eine Aktivierungstemperatur davon erreicht hat, auf Basis der von dem Abgassystemtemperaturerfassungsmittel (22) erfassten Temperatur des Abgassystems;
wobei das Verfahren umfasst:
einen Regenerationszeitbestimmungsschritt zum Bestimmen, ob ein Zeitpunkt vorliegt, zu welchem veranlasst wird, in dem Abgasreinigungsfilter (32) gesammelten Feinstaub zu verbrennen; und
einen AGR-Schaltschritt zum Schalten zwischen einer Regelung/Steuerung der Zurückführung des Abgases mittels des ersten AGR-Steuerungs-/Regelungsmittels (11, 40, 43) und einer Regelung/Steuerung der Zurückführung des Abgases mittels des zweiten AGR-Steuerungs-/Regelungsmittels (12, 40, 44) gemäß der von dem Abgassystemtemperaturerfassungsmittel (22) erfassten Temperatur des Abgassystems, in einem Fall, in welchem das Vorliegen eines Zeitpunkts bestimmt worden ist, zu welchem veranlasst wird, den Feinstaub zu verbrennen,
**dadurch gekennzeichnet,**
**dass** das Verfahren ferner umfasst
einen Regenerationsausführungsschritt zum Erhöhen einer Temperatur des Abgases, welches in den Abgasreinigungsfilter (32) fließt, durch Ausführen einer Nacheinspritzung, in einem Fall, in welchem das Vorliegen eines Zeitpunkts bestimmt worden ist, zu welchem veranlasst wird, den Feinstaub zu verbrennen und in welchem bestimmt worden ist, dass die Temperatur des Oxidationskatalysators (31) die Aktivierungstemperatur erreicht hat; und
einen Verbrennungsbestimmungsschritt zum Bestimmen, ob die Temperatur des Abgases, welches in den Abgasreinigungsfilter (32) fließt, eine Verbrennungstemperatur von Feinstaub erreicht hat, auf Basis der von dem Abgassystemtemperaturerfassungsmittel (22) erfassten Temperatur des Abgassystems,
wobei der AGR-Schaltschritt Regelung/Steuerung der Zurückführung des Abgases mittels des ersten AGR-Steuerungs-/Regelungsmittels (11, 40, 43) auswählt, in einem Fall, in dem bestimmt worden ist, dass die Temperatur des Abgases die Verbrennungstemperatur nicht erreicht hat; und
wobei der AGR-Schaltschritt Regelung/Steuerung der Zurückführung des Abgases mittels des zweiten AGR-Steuerungs-/Regelungsmittels (12, 40, 44) auswählt, in einem Fall, in dem bestimmt worden ist, dass die Temperatur des Abgases die Verbrennungstemperatur erreicht hat.

## Revendications

1. Dispositif de purification d'échappement pour un moteur à combustion interne (1) équipé d'un turbocompresseur (8) qui entraîne un compresseur (82) par la rotation d'une turbine (81) prévue dans un système d'échappement du moteur à combustion interne (1), et
filtre de purification d'échappement (32) qui est prévu dans le système d'échappement plus en aval de la turbine (81) et collecte les particules de matière dans l'échappement, le dispositif comprenant:
un premier chemin EGR (6) qui recycle une partie des gaz d'échappement d'un côté amont de la turbine (81) dans un chemin d'admission (2, 3) du moteur à combustion interne (1);
un premier moyen de commande EGR (11, 40, 43) pour contrôler un débit de gaz d'échappement recyclé via le premier chemin EGR (6);
un deuxième chemin EGR (10) qui recycle une partie des gaz d'échappement en aval du filtre de purification d'échappement (32) dans le chemin d'admission (2, 3) ;
un deuxième moyen de commande EGR (12, 40, 44) pour contrôler un débit de gaz d'échappement recyclé via le deuxième chemin EGR (10) ;
un moyen de détection de la température du système d'échappement (22) pour détecter une température du système d'échappement;
un moyen de détermination d'un moment de régénération (40) pour déterminer s'il est temps de provoquer la combustion des particules de matière collectées dans le filtre de purification d'échappement (32); et
un catalyseur d'oxydation (31) prévu dans le système d'échappement plus en amont que le filtre de purification d'échappement (32); et
un moyen de détermination de l'activité du catalyseur (40) pour déterminer si une température du catalyseur d'oxydation (31) a atteint une température d'activation de celui-ci, sur base de la température du système d'échappement détectée par le moyen de détection de la température du système d'échappement (22); et
un moyen de commutation EGR (40, 45) pour commuter entre la commande de recyclage des gaz d'échappement à l'aide du premier moyen de commande EGR (11, 40, 43) et la commande de recyclage des gaz d'échappement à l'aide du deuxième moyen de commande EGR (12, 40, 44) en fonction de la température du système d'échappement détectée par le moyen de détection de la température du système d'échappement (22), dans un cas où il a été déterminé que c'est le moment de provoquer la combustion des particules de matière;
**caractérisé en ce que**
le dispositif comprend en outre
un moyen d'exécution de la régénération (40, 41) afin d'augmenter une température des gaz d'échappement s'écoulant dans le filtre de purification des gaz d'échappement (32) en effectuant une post-injection, dans un cas où il a été déterminé que c'est le moment de provoquer la combustion des particules de matière et il a été déterminé que la température du catalyseur d'oxydation (31) a atteint la température d'activation; et
un moyen de détermination de la combustion pour déterminer si la température des gaz d'échappement s'écoulant dans le filtre de purification d'échappement (32) a atteint une température de combustion des particules de matière, sur base de la température du système d'échappement détectée par le moyen de détection de la température du système d'échappement (22),
dans lequel le moyen de commutation EGR (40, 45) sélectionne la commande de recyclage des gaz d'échappement à l'aide du premier moyen de commande EGR (11, 40, 43) dans un cas où il a été déterminé que la température des gaz d'échappement n'a pas atteint la température de combustion; et
dans lequel le moyen de commutation EGR (40, 45) sélectionne la commande de recyclage des gaz d'échappement à l'aide du deuxième moyen de commande EGR (12, 40, 44) dans un cas où il a été déterminé que la température des gaz d'échappement a atteint la température de combustion.

2. Dispositif de purification d'échappement pour un moteur à combustion interne (1) suivant la revendication 1, dans lequel le moyen de commutation EGR (40, 45) sélectionne la commande de recyclage des gaz d'échappement à l'aide du premier moyen de commande EGR (11, 40, 43) dans un cas où il a été déterminé que la température du catalyseur d'oxydation (31) n'a pas atteint la température d'activation.

3. Dispositif de purification d'échappement pour un moteur à combustion interne (1) suivant la revendication 1 ou 2, dans lequel une quantité de post-injection est réduite plus fortement pendant que la commande de recyclage des gaz d'échappement est effectuée à l'aide du deuxième moyen de commande EGR (12, 40, 44) que lorsque la commande de recyclage d'échappement est effectuée à l'aide du premier moyen de commande EGR (11, 40, 43).

4. Procédé de purification d'échappement pour un moteur à combustion interne (1), incluant:
un turbocompresseur (8) qui entraîne un compresseur (82) par la rotation d'une turbine (81) prévue dans un système d'échappement du moteur à combustion interne (1);
un filtre de purification d'échappement (32) qui est prévu dans le système d'échappement plus en aval de la turbine (81) et collecte les particules de matière dans l'échappement;
un premier chemin EGR (6) qui recycle une partie des gaz d'échappement d'un côté amont de la turbine (81) dans un chemin d'admission (2, 3) du moteur à combustion interne (1);
un premier moyen de commande EGR (11, 40, 43) pour contrôler un débit de gaz d'échappement recyclé via le premier chemin EGR (6);
un deuxième chemin EGR (10) qui recycle une partie des gaz d'échappement en aval du filtre de purification d'échappement (32) dans le chemin d'admission (2, 3) ;
un deuxième moyen de commande EGR (12, 40, 44) pour contrôler un débit de gaz d'échappement recyclé via le deuxième chemin EGR (10);
un moyen de détection de la température du système d'échappement (22) pour détecter une température du système d'échappement;
un catalyseur d'oxydation (31) prévu dans le système d'échappement plus en amont que le filtre de purification d'échappement (32); et
un moyen de détermination de l'activité du catalyseur (40) pour déterminer si une température du catalyseur d'oxydation (31) a atteint une température d'activation de celui-ci, sur base de la température du système d'échappement détectée par le moyen de détection de la température du système d'échappement (22),
le procédé comprenant:
une étape de détermination d'un moment de régénération pour déterminer s'il est temps de provoquer la combustion des particules de matière collectées dans le filtre de purification d'échappement (32); et
une étape de commutation EGR pour commuter entre la commande de recyclage des gaz d'échappement à l'aide du premier moyen de commande EGR (11, 40, 43) et la commande de recyclage des gaz d'échappement à l'aide du deuxième moyen de commande (12, 40, 44) en fonction de la température du système d'échappement détectée par le moyen de détection de la température du système d'échappement (22), dans un cas où il a été déterminé que c'est le moment de provoquer la combustion des particules de matière,
**caractérisé en ce que**
le procédé comprend en outre
une étape d'exécution de la régénération afin d'augmenter une température des gaz d'échappement s'écoulant dans le filtre de purification des gaz d'échappement (32) en effectuant une post-injection, dans un cas où il a été déterminé que c'est le moment pour provoquer la combustion des particules de matière et il a été déterminé que la température du catalyseur d'oxydation (31) a atteint la température d'activation; et
une étape de détermination de la combustion pour déterminer si la température des gaz d'échappement s'écoulant dans le filtre de purification d'échappement (32) a atteint une température de combustion des particules de matière, sur base de la température du système d'échappement détectée par le moyen de détection de la température du système d'échappement (22),
dans lequel l'étape de commutation EGR sélectionne la commande de recyclage des gaz d'échappement à l'aide du premier moyen de commande EGR (11, 40, 43) dans un cas où il a été déterminé que la température des gaz d'échappement n'a pas atteint la température de combustion; et
dans lequel l'étape de commutation EGR sélectionne la commande de recyclage des gaz d'échappement à l'aide du deuxième moyen de commande EGR (12, 40, 44) dans un cas où il a été déterminé que la température des gaz d'échappement a atteint la température de combustion.
